# EUROPEAN PATENT SPECIFICATION

(11) **EP 2 548 787 B1**
(45) Date of publication and mention of the grant of the patent: **01.01.2014**
(21) Application number: 12174369.4
(22) Date of filing: 29.06.2012
(51) Int. Cl.: B62D 25/08

(54) **Vehicle front part structure**
Vorderkonstruktion eines Fahrzeugs
Structure avant de véhicule

(30) Priority: 30.06.2011 JP 2011146112
(43) Date of publication of application: 23.01.2013
(73) Proprietor: Honda Motor Co., Ltd., Tokyo 107-8556 (JP)
(72) Inventor: Matsuoka, Kiyohiko, Saitama, 351-0193 (JP); Sasaki, Katsuaki, Saitama, 351-0193 (JP); Sasaki, Sakae, Saitama, 351-0193 (JP)
(74) Representative: Herzog, Markus

(56) References cited:
- JP-A- 2004 155 351
- JP-A- 2004 217 144
- US-A1- 2008 211 255
- US-B2- 7 316 448

## Description

### BACKGROUND

The present invention relates to a vehicle front part structure and, more particularly, to a vehicle front part structure of a front engine vehicle.

As a cowl box, which is a vehicle front part structure, arranged in front of a wind shield, Japanese Unexamined Patent Application Publication No. 2003-112659 and Japanese Unexamined Patent Application Publication No. 2009-255791 disclose a cowl box which has both of external air introduction function for introducing external air and shock absorbing function. Such a cowl box absorbs an impact by being deformed by a load applied from the upper side of the vehicle and suppresses the load from being transferred to an engine arranged below the cowl box.

Recently, a vehicle has been developed in which the engine head position is higher than that of conventional vehicles. Such a vehicle having the higher engine head position has a disadvantage that shock absorption may be difficult because the height of the cowl box in the up-down direction is designed to be short.

US 7 316 448 A, in accordance with the preamble features of claim 1, discloses a vehicle front part structure comprising: a dashboard portioning an engine room and a cabin; a wind shield lower supporting a lower end of an window shield glass; a single piece cowl top covering an opening in front of the wind shield lower; the cowl top including: a first cowl cover section covering the opening with a cowl opening; a second cowl cover section extending integrally from the front part of the first cowl top cover section; the front side surface of the first cowl top cover section having the cowl opening and the rear side surface of the second cowl cover section are arranged to diverge from each other as they go up to form a through, and a design surface is arranged behind the through to be tilted forward.

### SUMMARY

The present invention has been made in view of the above problem, and an object thereof is to provide a vehicle front part structure which can realize an excellent shock absorption performance even when the height of the cowl box in the up-down direction is short.

A first aspect of the present invention provides a vehicle front part structure in accordance with claim 1.

In the aforementioned vehicle front part structure, it is preferable that the second cowl cover is comprised of a center lid which covers the cowl opening and side lids which are respectively provided to left and right of the center lid in a vehicle width direction.

In the aforementioned vehicle front part structure, it is preferable that the first cowl cover includes a longitudinal wall extending front-downward from a rear end of the cowl opening.

In the aforementioned vehicle front part structure, it is preferable that the second cowl cover includes a lid opening arranged above the cowl opening and a lower end of the longitudinal wall is arranged lower than a virtual line which connects a front end of the lid opening and a front end of the wind shield lower.

In the aforementioned vehicle front part structure, it is preferable that the longitudinal wall includes a bended bead which is formed on a rear surface of the longitudinal wall.

### BRIEF DESCRIPTION OF THE DRAWINGS

Fig. 1 is a side sectional view showing a vehicle front part structure including an air conditioning air intake hole according to an embodiment of the present invention.
Fig. 2 is a perspective view showing a lid dashboard upper and a wind shield lower according to the embodiment of the present invention.
Fig. 3A is a view showing a first cowl cover according to the embodiment of the present invention seen from oblique upper side. Fig. 3B is the first cowl cover according to the embodiment of the present invention seen from oblique lower side.
Fig. 4 is a perspective view showing the state of the vehicle front part structure where the first cowl cover is assembled to the lid dashboard upper and the wind shield lower shown in Fig. 2.
Fig. 5A is a view showing a lid frame number according to the embodiment of the present invention seen from the oblique upper side. Fig. 5B is a view showing the lid frame number according to the embodiment of the present invention seen from the oblique lower side.
Fig. 6A is a view showing a lid wiper pivot according to the embodiment of the present invention which is seen from the upper side. Fig. 6B is a view showing the lid wiper pivot which is seen from the lower side. Fig. 6C is a view showing a lid hood hinge according to the embodiment of the present invention which is seen from the upper side. Fig. 6D is a view showing the lid hood hinge which is seen from the lower side.
Fig. 7 is a perspective view showing a state of the vehicle front part structure in which the lid frame number, the lid wiper pivot and the lid hood hinge are assembled to the first cowl cover.
Figs. 8A and 8B are side views of the vehicle front part structure according to the embodiment of the present invention, showing the analysis result of the simulation that an object is collided with the vehicle front part structure from the upper side; Fig. 8A shows the view when the object is collided (0 sec) and Fig. 8B shows the view when 3 seconds have passed from the collision.
Figs. 9A and 9B are side views of the vehicle front part structure according to the embodiment of the present invention, showing the analysis result of the simulation that an object is collided with the vehicle front part structure from the upper side; Fig. 9A shows the view when 7 seconds have passed from the collision; and Fig. 9B is the view when 10 seconds have passed from the collision.
Fig. 10 is a side view of the vehicle front part structure according to the embodiment of the present invention, showing the analysis result of the simulation that an object is collided with the vehicle front part structure from the upper side, wherein the view shows the vehicle front part structure when 15 second have passed from the collision.

### DETALED DESCRIPTION OF THE PREFERRED EMBODIMENT

An embodiment of the present invention is described in detail with reference to the accompanying drawings. The same reference numerals are assigned to the same components in the following description, and the repeated explanation thereof is omitted.

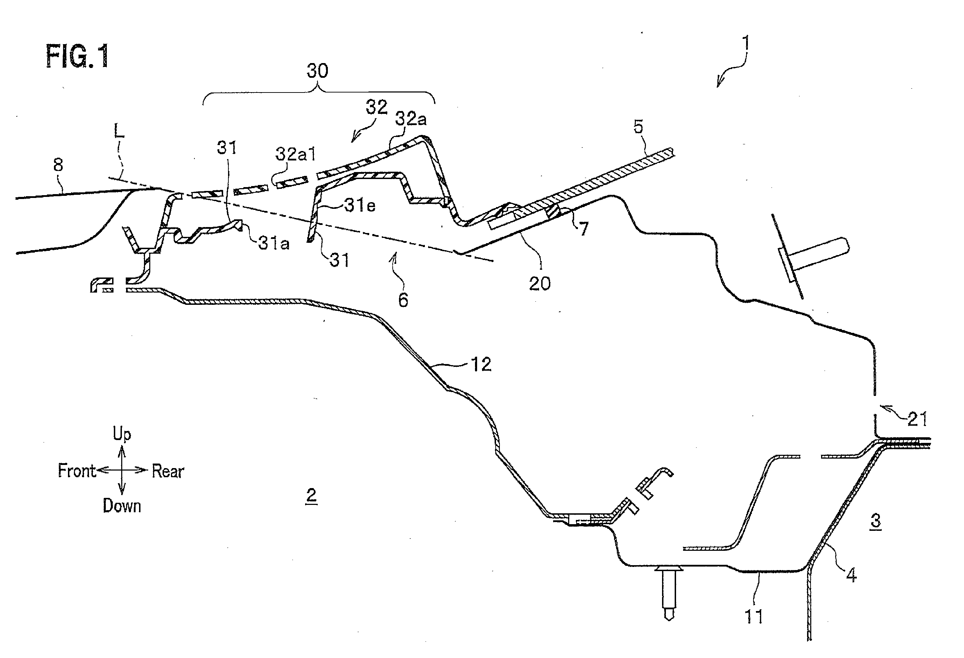

A vehicle front part structure 1 according to the embodiment of the present invention is a structure applied to a front engine vehicle as shown in Fig. 1. The vehicle front part structure 1 includes a dashboard upper 11, a lid dash board upper 12, a wind shield lower 20 and a cowl top 30.

### < Dashboard upper and lid dashboard upper >

The dashboard upper 11 is a steel plate member extending frontward from the upper part of a dashboard lower 4 which partitions an engine room 2 and a cabin 3. In the embodiment, the dashboard upper 11 is fixed to the dashboard lower 4 by welding or the like. The lid dash board upper 12 is a steel plate member extending front-upward from the front end of the dashboard upper 11. The lid dash board upper 12 is fixed to the dashboard upper 11 by welding or the like in the embodiment. The dashboard upper 11 and the lid dash board upper 12 are also referred to as "a dashboard upper".

### < Wind shield lower >

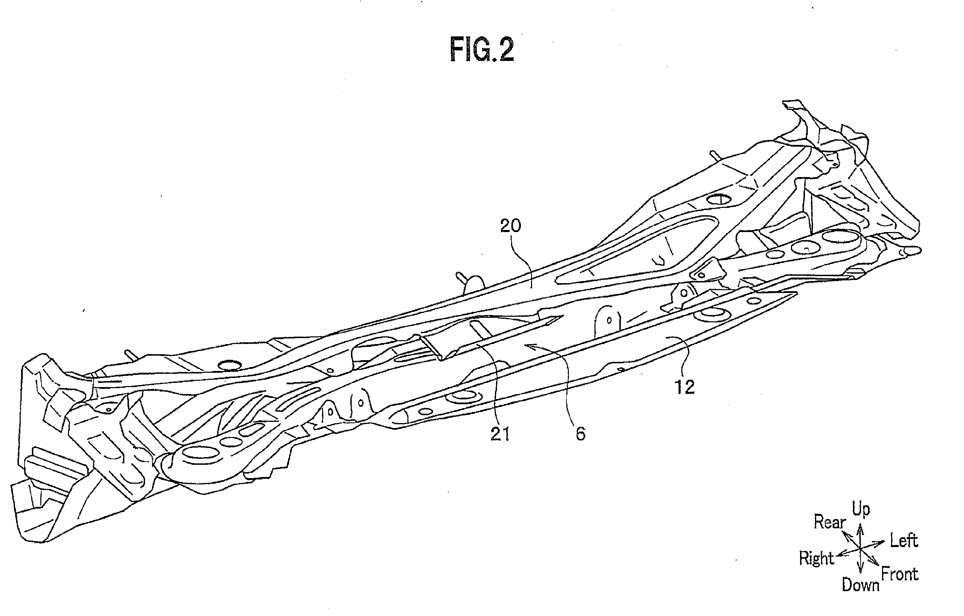

The wind shield lower 20 is a steel plate member which supports the lower end part of a wind shield glass 5. As shown in Fig. 2, the wind shield lower 20 includes a frame number plate 21 on which a frame number is given. Further, an opening 6 is formed between the lid dash board upper 12 and the wind shield lower 20 as shown in Figs. 1 and 2. In the embodiment, the wind shield lower 20 supports the wind shield glass 5 in a cantilevered structure. A shock absorbing member 7 is provided between the wind shield lower 20 and the wind shield glass 5. Further, the wind shield lower 20 includes an air conditioning air intake hole 21 which is formed at the end of the wind shield lower 20 on the side of the cabin 3 as shown in Fig. 1.

### < Cowl top >

The cowl top 30 is a resin member which constitutes a so-called cowl box together with the lid dash board upper 12 and the wind shield lower 20 by covering the opening 6 as shown in Fig. 1. The cowl top 30 includes a first cowl cover 31 and a second cowl cover 32.

### < First cowl cover >

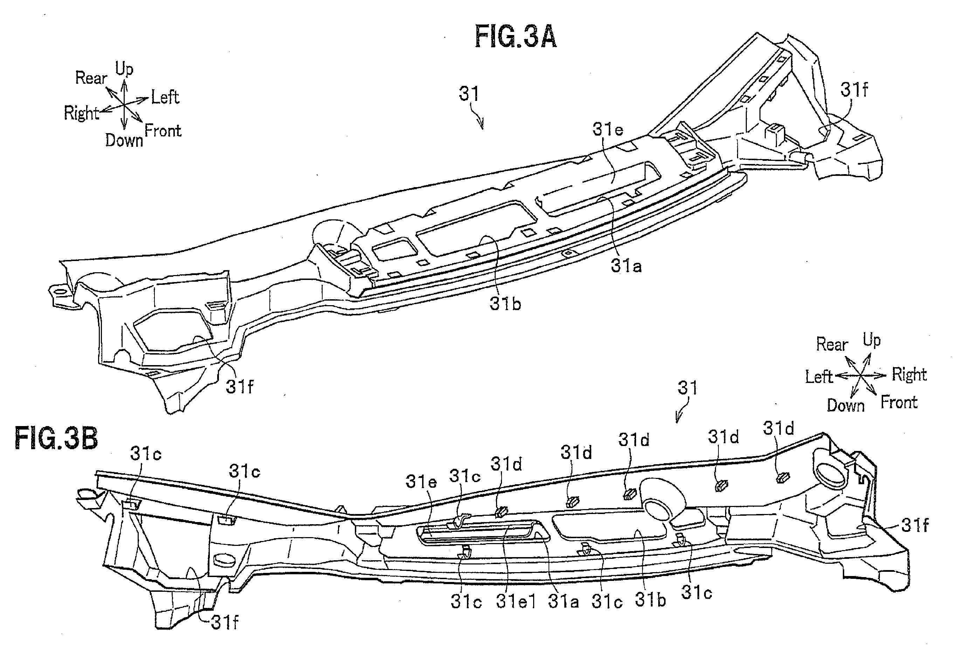

The first cowl cover 31 is a resin member which covers the opening 6. As shown in Fig. 3, the first cowl cover 31 includes an air conditioning air intake hole 31a and a frame number check opening 31b as a cowl opening formed in the vicinity of the center of the first cowl cover 31 in the vehicle width direction. The first cowl cover 31 further includes positioning ribs 31c and positioning clips 31d as a plurality of engaging portions provided on the lower end of the first cowl cover 31. The frame number check opening 31b is positioned above the frame number plate shown in Fig. 2. The first cowl cover 31 is fixed to the lid dash board upper 12 and the wind shield lower 20 by engaging the positioning ribs 31c and the engaging clips 31d with the holes, cut-out portions or an edge of the lid dash board upper 12 and the wind shield lower 20.

As shown in Fig. 3, the first cowl cover 31 includes a longitudinal wall 31e extending front-downward from the rear end of the air conditioning air intake hole 31a. As shown in Fig. 1, the lower end of the longitudinal wall 31e is positioned below the virtual line L which connects the front end of the air conditioning air intake hole 32a1 which is described later and the front end of the wind shield lower 20. The longitudinal wall 31 e functions as a water-proof rib which performs a vapor liquid separation of the external air flowing in from the air conditioning air intake hole 32a1.

The longitudinal wall 31e includes a bended bead 31e1 formed on the rear surface of the longitudinal wall 31e in the middle part of the rear surface in the up-down direction.

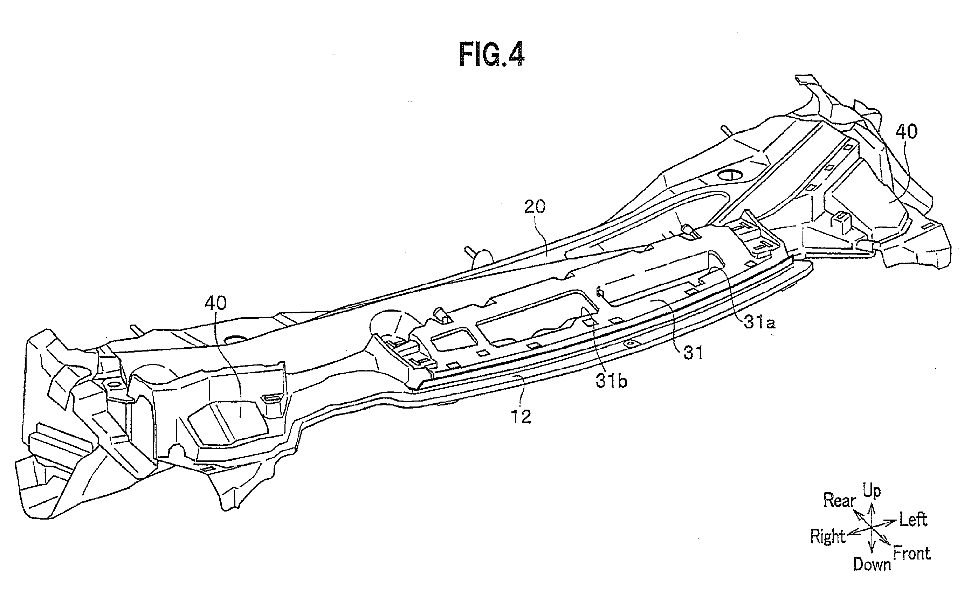

Further, the first cowl cover 31 includes a pair of openings 31f which is formed at the opposite ends of the first cowl cover 31 in the vehicle width direction as shown in Fig. 3. The opening 31f is positioned above a damper (not shown) and is covered by a cover 40 which is a resin member, as shown in Fig. 4. If a work needs to be done on the damper, a worker removes the cover 40 and performs the work on the damper.

### < Second cowl cover >

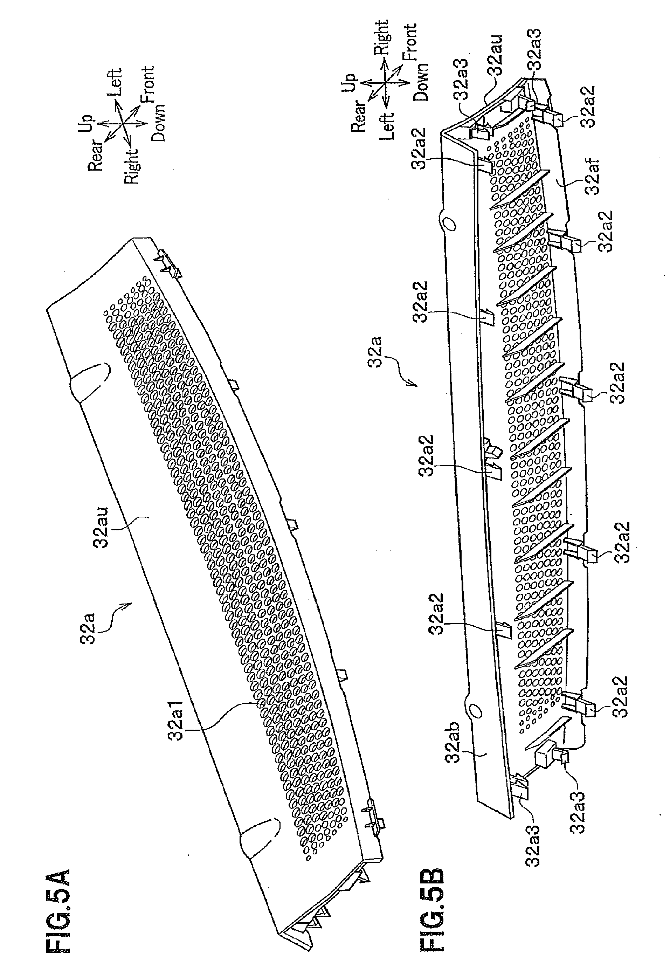

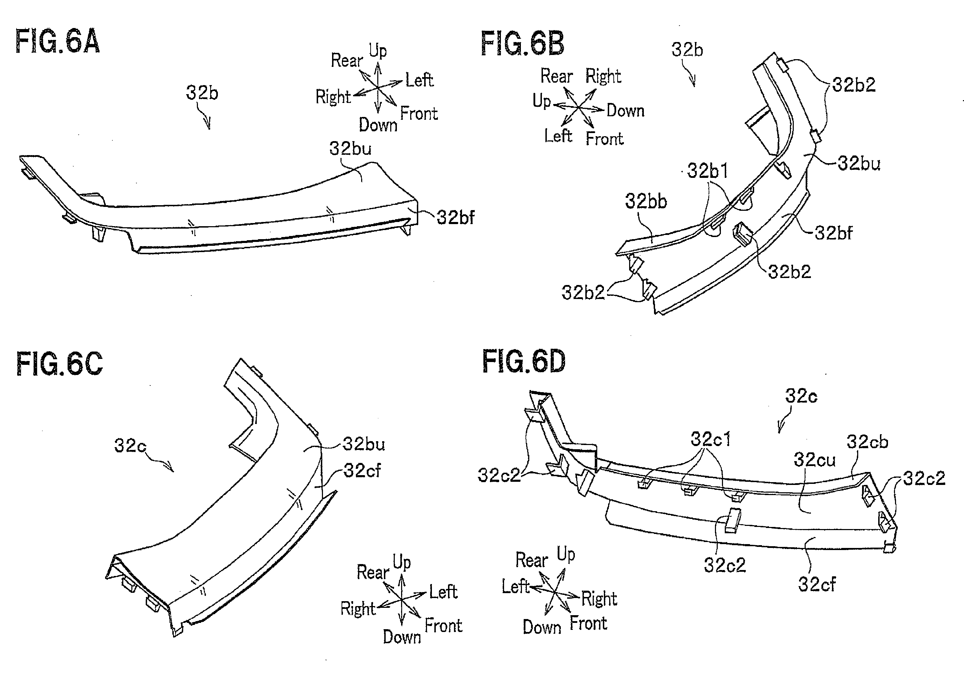

As shown in Fig. 1, the second cowl cover 32 is a resin member which is provided above the first cowl cover 31 and covers the air conditioning air intake hole 31a and the frame number check opening 31b. The design surface of the second cowl cover 32 has a forward tilting shape and a recessed shape in a side view. The design surface of the second cowl cover 32 is also a load receiving surface which receives the load applied from the upper side of the vehicle. The height of the front end of the design surface is set to be substantially the same as or a little lower than that of the rear end of the bonnet hood 8. The height of the rear end of the design surface is set higher than that of the rear end of the bonnet hood 8. The second cowl cover 32 includes a lid frame number 32a shown in Fig. 5, a lid wiper pivot 32b and a lid hood hinge 32c shown in Fig. 6.

### < Lid frame member >

The lid frame number 32a is a center lid which constitutes a part of the second cowl cover 32. The lid frame number 32a is a resin member which covers the air conditioning air intake hole 31a and the frame number check opening 31b. As shown in Figs. 5A and 5B, the lid frame number 32a is comprised of a front side surface 32af and a rear side surface 32ab and a design surface 32au which connects upper ends of the front side surface 32af and the rear side surface 32ab. The design surface 32au is arranged above the first cowl cover 31 with some space between the design surface 32au and the first cowl cover 31. The design surface 32au has a forward tilting shape and a recessed shape in a side view. The front side surface 32af and the rear side surface 32ab are formed in such a manner that they come close to each other as they go up. In other words, the lid frame number 32a has substantially a M shape in a side view.

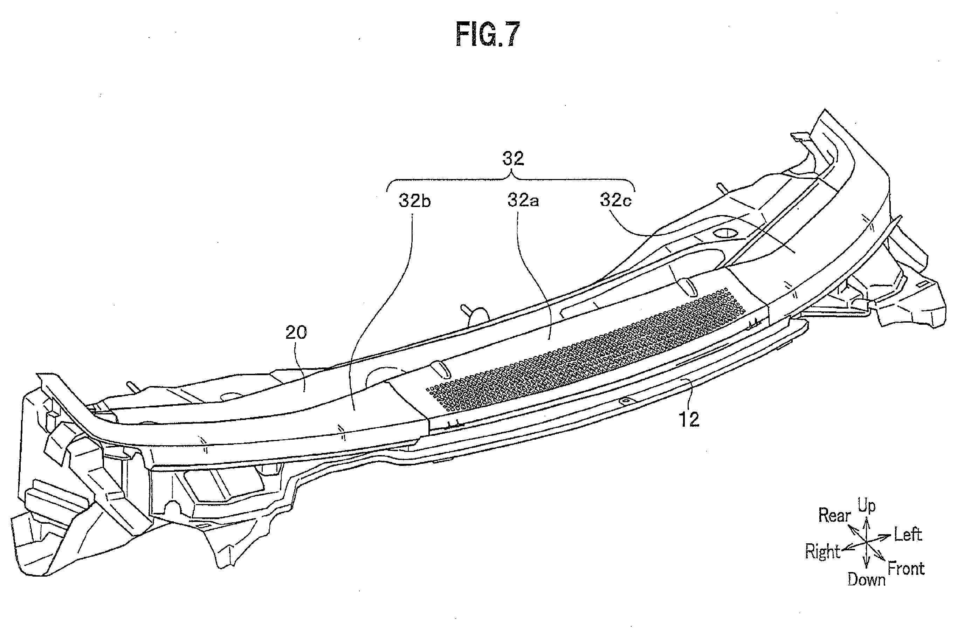

The lid frame number 32a includes a plurality of air conditioning air intake holes 32a1 as a lid opening formed in the design surface 32au and positioning ribs 32a2 and engaging clips 32a3 as a plurality of engaging portions which are provided at the lower end of the lid frame member 32a. The lid frame number 32a is fixed to the first cowl cover 31 as shown in Fig. 7 by engaging the positioning ribs 32a2 and the engaging clips 32a3 with holes or cut-out portions formed in the first cowl cover 31 or the edge of the first cowl cover 31 on the front and rear sides of the air conditioning air intake hole 31a and the frame number check opening 31b. When it is necessary to check the frame number, a worker removes the lid frame number 32a to see the frame number plate 2 through the frame number check opening 31b, whereby the worker can read the frame number.

The external air taken into the cowl box from the air conditioning air intake hole 32a1 is taken into an air conditioner (not shown) through the air conditioning air intake hole 31a1 and the air conditioning air intake hole 21.

### < Lid wiper pivot >

The lid wiper pivot 32b is a right side lid which constitutes a part of the second cowl cover 32 and is a resin member. As shown in Figs. 6A and 6B, the lid wiper pivot 32b is comprised of a front side surface 32bf, a rear side surface 32bb and a design surface 32bu which connects the upper ends of the front side surface 32bf and a rear side surface 32bb. The design surface 32bu is arranged above the first cowl cover 31 with some space between the design surface 32bu and the first cowl cover 31 and has a forward tilting shape and a recessed shape in a side view. Further, the front side surface 32bf and the rear side surface 32bb are formed in such a manner that they come close to each other as they go up. In other words, the lid wiper pivot 32b has substantially a M shape in a side view.

The lid wiper pivot 32b includes positioning ribs 32b1 and engaging clips 32b2 as a plurality of engaging portions provided at the lower end of the lid wiper pivot 32b. The lid wiper pivot 32b is fixed to the first cowl cover 31 as shown in Fig. 7 by engaging the positioning ribs 32b1 and the engaging clips 32b2 with holes or cut-out portions formed in the first cowl cover 31 or the edge of the first cowl cover 31.

### < Lid hood hinge >

The lid hood hinge 32c is a left side lid which constitutes a part of the second cowl cover 32 and is a resin member. The lid hood hinge 32c is comprised of a front side surface 32cf, a rear side surface 32cb and a design surface 32cu which connects the upper ends of the front side surface 32cf and the rear side surface 32cb. The design surface 32cu is arranged above the first cowl cover 31 with some space between the design surface 32cu and the first cowl cover 31 and has a forward tilting shape and a recessed shape in a side view. Further, the front side surface 32cf and the rear side surface 32cb are formed in such a manner that they come close to each other as they go up. In other words, the lid hood hinge 32c has a substantially M shape in a side view.

The lid hood hinge 32c includes positioning ribs 32c1 and engaging clips 32c2 as a plurality of engaging portions provided at the lower end of the lid hood hinge 32c. The lid hood hinge 32c is fixed to the first cowl cover 31 as shown in Fig. 7 by engaging the positioning ribs 32c1 and the engaging clips 32c2 with the holes or cut-out portions formed in the first cowl cover 31 or the edge of the first cowl cover 31. When the maintenance of the ECU (not shown) is necessary, a worker can remove the lid hood hinge 32c and perform the maintenance work of the ECU.

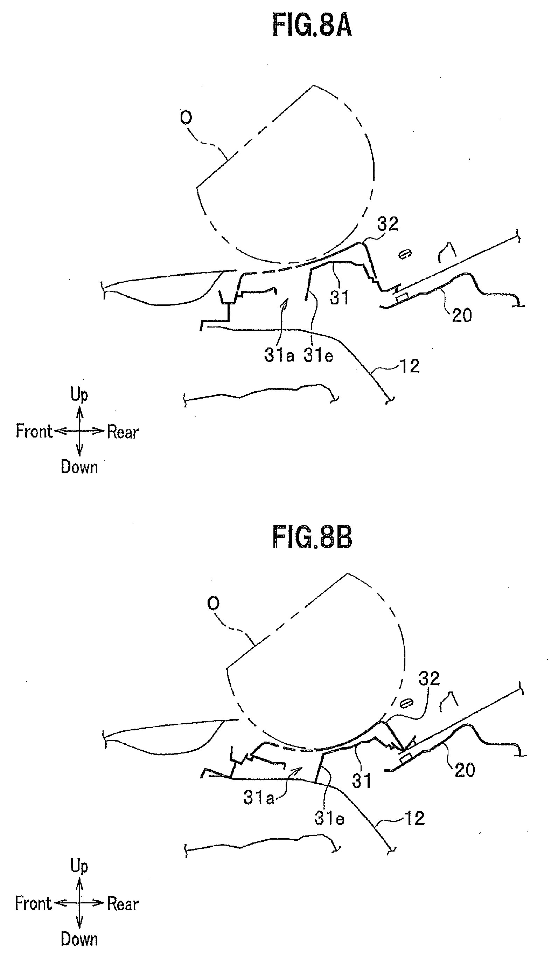

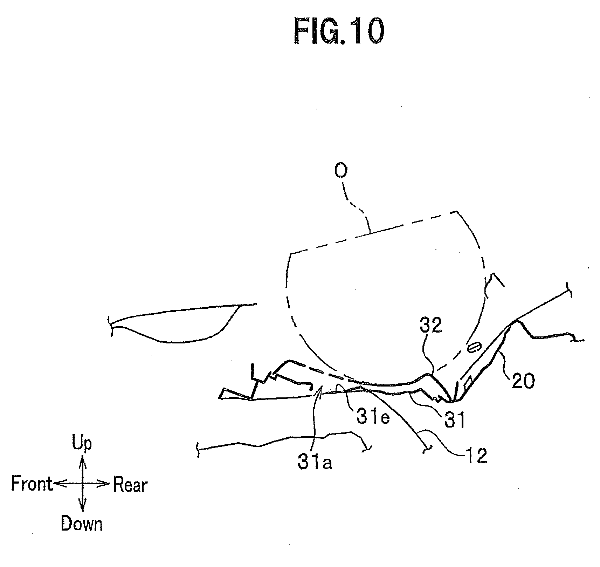

Subsquently, the analysis result of the simulation where an object is collided with the vehicle front part structure 1 according to the embodiment of the present invention from the upper side of the vehicle is described with reference to Figs. 8A to 10.

Firstly, when an object O is collided with the lid frame number 32a of the second cowl cover 32 of the vehicle front part structure 1 (Fig. 8A), the second cowl cover 32 and the first cowl cover 31 are deformed by the load of the object O. The vehicle front part structure 1 according to the embodiment includes the cowl top 30 of the double structure. The first cowl cover 31 and the second cowl cover 32 of the cowl top 30 forms a substantially C-shaped open cross section with the cowl opening (the air conditioning air intake hole 31a and the frame number check opening 31b). The design surfaces 32au, 32bu, 32cu of the second cowl cover 32 which are load receiving surfaces have a forward tilting shape and a recessed shape in a side view. Further, the front side surfaces 32af, 32bf, 32cf and the rear side surfaces 32ab, 32bb, 32cb come close to each other as they go up. With this structure, the second cowl cover 32 is flexibly deformed in such a manner that the front side surfaces 32af, 32bf, 32cf and the rear side surfaces 32ab, 32bb, 32cb are laid down toward the center of the second cowl cover 32 in the front-rear direction and the design surface 32au, 32bu, 32cu are dented. Further, as the second cowl cover 32 has a forward tilting shape and can preferably absorb an impact when the object O is collided with the vehicle from the upper side of the vehicle when the vehicle is running. Therefore, the vehicle front part structure 1 can realize an excellent impact absorption performance at the initial stage of the collision.

Further, as the second cowl cover 32 is comprised of three members of the lid frame number 32a, the lid wiper pivot 32b and the lid hood hinge 32c, it is possible to enhance the shock absorbing performance for the collision of an object from the upper side by deforming only the member to which the load is applied, compared with a case where the second cowl cover 32 is comprised of just one member.

Furthermore, if the vehicle is provided with a so-called raising hood, which raises the bonnet hood 8 to secure the space of the engine room 2 when the object O is collided with the vehicle front part structure 1 for reducing the impact applied to the object O, it is possible to further enhance its shock absorbing performance by making the rise of the initial acceleration of the hood raising excellent.

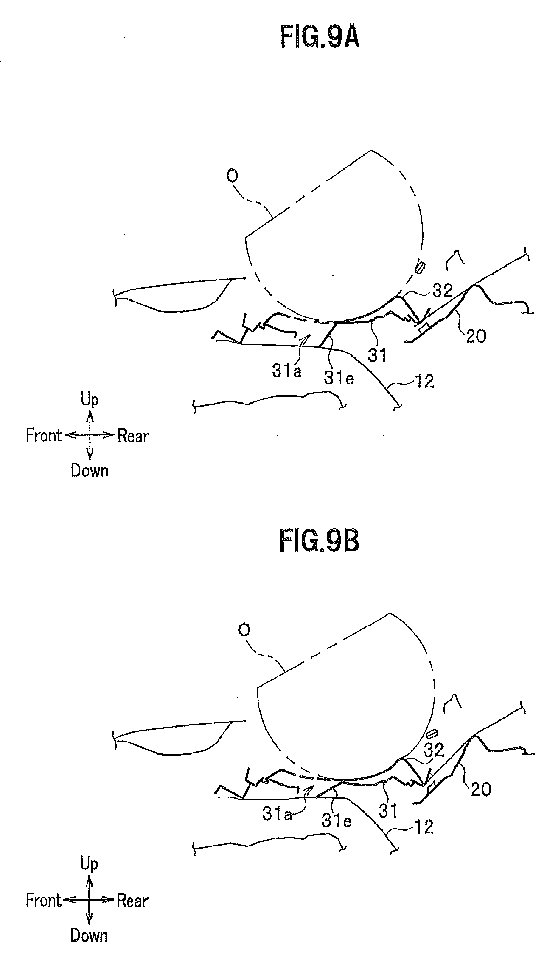

Subsquently, the design surface 32au of the lid frame number 32a pushes the first cowl cover 31 downward, making the longitudinal wall 3 1 e to come in contact with the lid dash board upper 12 (Fig. 8B). As the longitudinal wall 31e extends front-downward and the bended bead 31e1 (see Fig. 1) is formed on the rear surface of the longitudinal wall 31 e, the longitudinal wall 31 e is deformed toward the front side of the lid dash board upper 12 with the longitudinal wall 31 e being bended at the bended bead 31e1 (Fig. 9A to Fig. 10).

The vehicle front part structure 1 according to the embodiment of the present invention includes the cowl top 30 of the double structure. The first cowl cover 31 and the second cowl cover 32 of the cowl top 30 forms a substantially C shape opening with the cowl opening (the air conditioning air intake hole 31a and the frame number check opening 31b), and the design surfaces 32au, 32bu, 32cu of the second cowl cover 32 which are load receiving surfaces have a forward tilting shape and a recessed shape in a side view. Further, the front side surfaces 32af, 32bf, 32cf and the rear side surfaces 32ab, 32bb, 32cb which come in contact with the first cowl cover 31 come close to each other as they go up. With this structure, the second cowl cover 32 is flexibly deformed in such a manner that the front side surfaces 32af, 32bf, 32cf and the rear side surfaces 32ab, 32bb, 32cb are laid down toward the center of the second cowl cover 32 in the front-rear direction the design surfaces 32au, 32bu, 32cu are dented. Further, as the second cowl cover 32 has a forward tilting shape and can preferably absorb an impact when the object O is collided with the vehicle from the upper side of the vehicle when the vehicle is running. Therefore, the vehicle front part structure 1 can realize an excellent shock absorbing performance at the initial stage of the collision.

As the vehicle front part structure 1 according to the embodiment of the present invention includes the longitudinal wall 31e which functions as a water-proof rib, it is possible to realize a preferable vapor liquid separation even in a vehicle in which the speed of the external air flowing in from the air conditioning air intake hole 32a1 is higher because the height of the cowl box is designed to be short.

Further, as the longitudinal wall 31e extends front-downward and the bended bead 31e is formed on the rear side of the longitudinal wall 31e in the vehicle front part structure 1 according to the embodiment of the present invention, it is possible to suppress the longitudinal wall 31e from affecting the shock absorption performance.

The embodiment of the present invention has been described as described above with reference to the accompanying drawings. However, the present invention is not limited to the embodiment of the present invention and may be modified without deviating from the spirit of the invention. For example, the second cowl cover 32 is not limited to the structure in which the second cowl cover 32 is comprised of three members and may be comprised of one member, two members or more than three member. Further, the design surface of the second cowl cover 32 may have a structure having a forward tilting shape and straight shape in a side view. Furthermore, as the dashboard upper of the present invention, the dashboard upper 11 and the lid dash board upper 12 may be integrally formed of just one steel plate member. Furthermore, the dashboard lower and the lid dashboard upper may be integrally formed of one steel plate member. More specifically, regardless of whether the dashboard lower 4, the dashboard upper 11 and the lid dash board upper 12 are integrally formed or are separately formed, the part extending frontward from the dashboard lower which partitions the engine room and the cabin corresponds to the dashboard upper of the present invention.

As described above, the present invention can provide a vehicle front part structure which has an excellent shock absorption performance even in a vehicle in which the height of the cowl box in the up-down direction is designed to be short.

There is provided the cowl top 30a of the vehicle front part structure 1 including a first cowl cover 31 which covers the opening 6 and has an air conditioning air intake hole 31a and a second cowl cover 32 which is provided above the first cowl cover 31 and covers the air conditioning air intake hole 31a. The second cowl cover includes a front side surface and a rear side surface which come in contact with the first cowl cover 31 and a design surface which connects an upper end of the front side surface to an upper end of the rear side surface. The front side surface and the rear side surface are arranged in such a manner that the front side surface and the rear side surface come close to each other as they go up and the design surface is arranged to be tilted forward.

## Claims

1. A vehicle front part structure comprising:
a dashboard upper (11) which extends frontward from an upper part of a dashboard lower (4) which partitions an engine room (3) and a cabin (2);
a wind shield lower (20) which supports a lower end of an window shield glass (5);
a cowl top (30) which covers an opening (6) formed between the dashboard upper (11) and the wind shield lower(20); wherein
the cowl top (30) includes
a first cowl cover (31) which covers the opening (6) and has a cowl opening (31a, 31b); and
**characterized by** a second cowl cover (32) which is provided above the first cowl cover (31) and covers the cowl opening (6); the second cowl cover (32) including: a front side surface (32af, 32bf, 32cf) and a rear side surface (32ab, 32bb, 32cb) which come in contact with the first cowl cover and a design surface (32au, 32bu, 32cu) which connects an upper end of the front side surface to an upper end of the rear side surface, wherein
the front side surface (32af, 32bf, 32cf) and the rear side surface (32ab, 32bb, 32cb) are arranged in such a manner that the front side surface and the rear side surface come close to each other as they go up and the design surface (32au, 32bu, 32cu) is arranged to be tilted forward, and
wherein the first cowl cover (31) and the second cowl cover (32) are separate bodies.

2. The vehicle front part structure according to Claim 1, wherein the second cowl cover (32) is comprised of a center lid (32a) which covers the cowl opening and side lids (32b, 32c) which are provided to left and right of the center lid in a vehicle width direction, respectively.

3. The vehicle front part structure according to Claim 1 or 2, wherein the first cowl cover (31) includes a longitudinal wall (31 e) extending front-downward from a rear end of the cowl opening.

4. The vehicle front part structure according to Claim 3, wherein the second cowl cover (32) includes a lid opening (32a1) arranged above the cowl opening and a lower end of the longitudinal wall is arranged lower than a virtual line (L) which connects a front end of the lid opening and a front end of the wind shield lower(20).

5. The vehicle front part structure according to any one of claims 1 to 4, wherein the longitudinal wall (31e) includes a bended bead (31e1) which is formed on a rear surface of the longitudinal wall.

## Patentansprüche

1. Fahrzeugfrontteilstruktur umfassend:
eine obere Trennwand (11), die sich von einem oberen Teil einer unteren Trennwand (4), die einen Motorraum (3) und eine Kabine (2) trennt, nach vorne erstreckt;
ein Windschutzscheiben-Unterelement (20), das ein unteres Ende einer Windschutzglasscheibe (5) trägt;
eine obere Verkleidung (30), die eine Öffnung (6) abdeckt, die zwischen der oberen Trennwand (11) und dem Windschutzscheiben-Unterelement (20) ausgebildet ist; worin
die obere Verkleidung (30) enthält:
eine erste Verkleidungsabdeckung (31), die die Öffnung (6) abdeckt und eine Verkleidungsöffnung (31 a, 31 b) aufweist; und
**gekennzeichnet durch** eine zweite Verkleidungsabdeckung (32), die über der ersten Verkleidungsabdeckung (31) vorgesehen ist und die Verkleidungsöffnung (6) abdeckt; wobei die zweite Verkleidungsabdeckung (32) enthält: eine vorderseitige Oberfläche (32af, 32bf, 32cf), eine rückseitige Oberfläche (32ab, 32bb, 32cb), die mit der ersten Verkleidungsabdeckung in Kontakt kommen, und eine Designoberfläche (32au, 32bu, 32cu), die eine oberes Ende der vorderseitigen Oberfläche mit einem oberen Ende der rückseitigen Oberfläche verbindet, worin
die vorderseitige Oberfläche (32af, 32bf, 32cf) und die rückseitige Oberfläche (32ab, 32bb, 32cb) derart angeordnet sind, dass sich die vorderseitige Oberfläche und die rückseitige Oberfläche nach oben hin einander annähern und die Designoberfläche (32au, 32bu, 32cu) nach vorne geneigt angeordnet ist, und
worin die erste Verkleidungsabdeckung (31) und die zweite Verkleidungsabdeckung (32) separate Körper sind.

2. Die Fahrzeugfrontteilstruktur nach Anspruch 1, worin die zweite Verkleidungsabdeckung (32) gebildet ist aus einer mittleren Abdeckung (32a), die die Verkleidungsöffnung abdeckt, und seitlichen Abdeckungen (32b, 32c), die jeweils in Fahrzeugbreitenrichtung links und rechts der mittleren Abdeckung vorgesehen sind.

3. Die Fahrzeugfrontteilstruktur nach Anspruch 1 oder 2, worin die erste Verkleidungsabdeckung (31) eine Längswand (31e) enthält, die sich von einem hinteren Ende der Verkleidungsöffnung nach vorne und hinten erstreckt.

4. Die Fahrzeugfrontteilstruktur nach Anspruch 3, worin die zweite Verkleidungsabdeckung (32) eine Abdeckungsöffnung (32a1) enthält, die über der Verkleidungsöffnung angeordnet ist, und ein unteres Ende der Längswand niedriger angeordnet ist, als eine virtuelle Linie (L), die ein vorderes Ende der Abdeckungsöffnung und ein vorderes Ende des Windschutzscheiben-Unterelements (20) verbindet.

5. Die Fahrzeugfrontteilstruktur nach einem der Ansprüche 1 bis 4, worin die Längswand (31 b) einen gebogenen Wulst (31e1) enthält, der an einer Rückseite der Längswand ausgebildet ist.

## Revendications

1. Une structure avant de véhicule comprenant :
un dessus de tableau de bord (11) qui s'étend vers l'avant à partir d'une partie supérieure d'un dessous de tableau de bord (4) qui sépare un compartiment moteur (3) d'un habitacle (2) ;
un dessous de pare-brise (20) qui soutient une extrémité inférieure de la vitre du pare-brise (5) ;
un dessus de capot (30) qui couvre une ouverture (6) formée entre le dessus du tableau de bord (11) et le dessous du pare-brise (20) ; dans laquelle
le dessus du capot (30) comprend
un premier cache de capot (31) qui couvre l'ouverture (6) et possède une ouverture de capot (31a, 31b) ; et **caractérisée par**
un deuxième cache de capot (32) qui est prévu au-dessus d'un premier cache de capot (31) et couvre l'ouverture de capot (6) ; le deuxième cache de capot (32) comprenant :
une surface latérale avant (31af, 32bf, 32cf) et une surface latérale arrière (32ab, 32bb, 32cb) qui entre en contact avec le premier cache de capot et une surface de conception (32au, 32bu, 32cu) qui relie une extrémité supérieure de la surface latérale avant à une extrémité supérieure de la surface latérale arrière, dans laquelle
la surface latérale avant (32af, 32bf, 32cf) et la surface latérale arrière (32ab, 32bb, 32cb) sont disposées de telle manière que la surface latérale avant et la surface latérale arrière se rapprochent en montant et la surface de conception(32au, 32bu, 32cu) est destinée à être basculée vers l'avant, et
dans laquelle le premier cache de capot (31) et le deuxième cache de capot (32) sont des éléments séparés.

2. La structure avant de véhicule selon la revendication 1, dans laquelle le deuxième cache de capot (32) est composé d'un couvercle central (32a) qui couvre l'ouverture du capot et les couvercles latéraux (32b, 32c) qui sont prévus respectivement à gauche et à droite du couvercle central dans le sens de la largeur du véhicule.

3. La structure avant de véhicule selon l'une des revendications 1 ou 2, dans laquelle le premier cache de capot (31) comprend une paroi longitudinale (31e) s'étendant vers l'avant et le bas à partir d'une extrémité postérieure de l'ouverture du capot.

4. La structure avant de véhicule selon la revendication 3, dans laquelle le deuxième cache de capot (32) comprend une ouverture de couvercle (32a1) disposée au-dessus de l'ouverture de capot et une extrémité inférieure de la paroi longitudinale est disposée plus bas qu'une ligne virtuelle (L) qui relie une extrémité avant de l'ouverture du couvercle et une extrémité avant du dessous du pare-brise (20).

5. La structure avant de véhicule selon l'une des revendications 1 à 4, dans laquelle la paroi longitudinale (31 e) comprend un bourrelet courbé (31e1) qui est formé sur la surface postérieure de la paroi longitudinale.
